# EUROPÄISCHE PATENTSCHRIFT

(11) **EP 2 463 408 B1**
(45) Veröffentlichungstag und Bekanntmachung des Hinweises auf die Patenterteilung: **05.04.2017**
(21) Anmeldenummer: 11191980.9
(22) Anmeldetag: 05.12.2011
(51) Int. Cl.: C25B 11/03, H01M 8/02, C25B 9/08

(54) **Verfahren zum Einbau von Sauerstoffverzehrelektroden in elektrochemische Zellen und elektrochemische Zelle**
Method for installing oxygen consumption electrodes in electrochemical cells and electrochemical cell
Procédé d'intégration d'électrodes d'alimentation en oxygène dans des cellules électrochimiques et cellule électrochimique

(30) Priorität: 10.12.2010 DE 102010062803
(43) Veröffentlichungstag der Anmeldung: 13.06.2012
(73) Patentinhaber: Covestro Deutschland AG, 51373 Leverkusen (DE)
(72) Erfinder: Bulan, Andreas, 40764 Langenfeld (DE); Weber, Rainer, 51519 Odenthal (DE); Lochhaas, Helmut, 84524 Neuötting (DE)
(74) Vertreter: Levpat

(56) Entgegenhaltungen:
- EP-A2- 1 728 896
- WO-A1-03/023090
- US-A1- 2003 162 081
- US-A1- 2010 255 873

## Beschreibung

Die Erfindung betrifft ein Verfahren zum Einbau einer Sauerstoffverzehrelektrode in eine Elektrolysevorrichtung und eine Elektrolysevorrichtung, insbesondere für den Einsatz in der Chloralkali-Elektrolyse, bei der hinsichtlich ihrer Gasdichtigkeit kritische Bereiche mit besonderen Pasten abgedichtet sind.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzten. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas- und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Weiterhin sollte die SVE einfach in die Elektrolysevorrichtung eingebaut und ausgetauscht werden können. Zum Einbau sind verschiedene Verfahren beschrieben.

In der US 7.404.878 wird beschrieben, dass z.B. die Stosskanten zweier SVEs mit einer Schicht enthaltend Perfluorcarbonsäure, Perfluorsulfonylfluorid oder einen Perfluorcarbonsäurealkylester verbunden werden. Die Schicht muss anschließend mit den SVEs durch eine Hitzebehandlung verbunden werden. Die Methode ist schwierig anzuwenden, da bei der Hitzebehandlung die SVE beschädigt werden kann. Weiterhin besteht der Nachteil, dass in den entstehenden abgedeckten und elektrochemisch nicht aktiven Rand- und Überlappungsbereichen die SVE nicht arbeitet und dadurch die restliche Fläche mit einer höheren Stromdichte betrieben wird, was zu einer Spannungserhöhung und damit zu einem höheren Energieverbrauch führt.

In der DE 4444114 A1 wird der Einbau einer SVE durch Kontaktierung an die Grundstruktur eines elektrochemischen Reaktionsapparates mittels Ausbildung eines Klemmkontaktes beschrieben. Bei Verwendung von Klemm- oder Presskontakten stellte sich jedoch heraus, dass sich ihr elektrischer Übergangswiderstand im Verlauf des Betriebes der Anordnung häufig verschlechtert - hieraus ergibt sich ein unerwünschter Anstieg des Verbrauches elektrischer Energie. Weiterhin nachteilig ist, dass die Bereiche der Klemmleisten elektrochemisch inaktiv sind und somit SVE Fläche verringert wird.

Eine elektrisch dauerhaftere Verbindung zwischen Elektroden und elektrochemischem Reaktionsapparat ist mit Hilfe von Schweißprozessen zu erzielen, wie in der. EP 1041176 A1 beschrieben. Bei Verwendung einer Gasdiffusionselektrode mit einem nicht perforierten, umlaufenden, metallischen Rand kann eine direkte Verschweißung mit der Grundstruktur der Elektrode vorgenommen werden. Der in der EP 1041176 A1 erwähnte, durchgängige Rand der Elektrodengrundstruktur bedingt jedoch als Trägerstruktur ein Loch- oder Schlitzblech. Oftmals bestehen daher die zu integrierenden Elektroden aus einer metallisch leitenden, über den gesamten Bereich offenporigen Grundstruktur, in deren Hohlräume die elektrochemisch aktive Masse, im Folgenden Beschichtung genannt, eingebettet ist. Versuche die beschichtete Elektrode direkt zu verschweißen, scheiterten an der meist statt findenden Zersetzung der Beschichtungsmasse bei hohen Fügetemperaturen. Um eine qualitativ einwandfreie Verbindung zu erreichen, ist in der Schweißzone eine Abwesenheit von Beschichtungsmasse notwendig: die offenporige Grundstruktur der Elektrode ist daher in diesem Bereich frei von Beschichtungsmasse und würde bei Betrieb in dem elektrochemischen Reaktionsapparat ohne Maßnahmen zur Erzielung einer Dichtwirkung eine Vermischung der auf beiden Seiten der Elektrode befindlichen Medien ermöglichen.

Um die Vermischung der Medien zu vermeiden, wird die unbeschichtete Schweißzone zum Zeitpunkt der Applikation mit flüssigen oder pastösen und sich nach einiger Zeit verfestigenden Materialien, welche die offenporige Struktur an dieser Stelle abdichten, versehen. Eine Verfestigung der Dichtmaterialien kann beispielsweise durch chemisches Aushärten einer flüssig oder pastenartig aufgebrachten Substanz erfolgen. Aufgrund der in dem elektrochemischen Reaktionsapparat vorhandenen, chemisch meist sehr aggressiven Bedingungen hat sich die Standzeit der derart erzeugten bekannten Abdichtungen als sehr kurz erwiesen - sie bewegte sich im Bereich von Wochen bzw. wenigen Monaten und steht somit einem effizienten Dauereinsatz des elektrochemischen Reaktionsapparates entgegen.

Weiterhin ist die Verwendung einer durch Erhitzen plastisch gewordenen Masse, welche bei Abkühlung wieder erstarrt, als Dichtmaterial in der Literatur, s. EP 1029946 A2, beschrieben worden. Hierbei können zwar chemisch inerte Substanzen, wie PTFE, verwendet werden. Zur dauerhaften Verbindung dieser Substanz mit der Grundstruktur muss jedoch eine hohe Temperatur aufgewandt werden - die Durchführung der Prozesse nach der Lehre des zitierten Patentes erfordert demzufolge umfangreiche Vorrichtungen / Maschinen.

Die DE 10152792 A1 beschreibt eine Methode zur Herstellung einer Verbindung zwischen einer Gasdiffusionselektrode und Grundstruktur eines elektrochemischen Reaktionsapparates, bei der eine Trennung der auf Vorder- und Rückseite der Elektrode befindlichen Medien gewährleistet werden kann, indem eine elektrisch niederohmige Verbindung hergestellt wird zwischen dem Rand der Elektrode und einer metallischen falzartigen, den Rand aufnehmenden Ausbildung eines umlaufenden Rahmens und der elektrisch niederohmigen Anbindung des umlaufenden Rahmens an die Grundstruktur des elektrochemischen Reaktionsapparates. Das Verfahren gemäß der DE 10152792 A1 ist dadurch gekennzeichnet, dass der gefalzte Teil des Rahmens aus Profilen gefertigt wird, die in den Eckbereichen auf Stoß- oder Gehrung geschnitten sind und mittels Laserschweißverfahren und anderer Schweißverfahren oder Lötverfahren miteinander verbunden sind. Nachteil des Verfahrens ist insgesamt, dass die Einbaumaßnahme sehr aufwändig und kostenintensiv ist. Ein Wechsel der SVEs stellt sich ebenfalls sehr aufwändig dar und kann nicht ohne entsprechende Werkstatt und Werkzeug durchgeführt werden. Ebenfalls nachteilig auf die Performance wirkt sich aus, dass die gefalzten Bereiche / Profile elektrochemisch inaktiv sind und somit aktive SVE Fläche verloren geht. Folge hiervon ist, dass die SVE bei einer höheren Stromdichte betrieben wird als die Gegenelektrode (Anode), was zu einer Erhöhung der Elektrolysespannung und zu einer Verschlechterung der Wirtschaftlichkeit führt.

EP 1029946 A2 beschreibt eine Gasdiffusionselektrode, bestehend aus einer reaktiven Schicht und einer Gasdiffusionsschicht und einer Kollektorplatte, z.B. einem Silbernetz. Die Beschichtung bedeckt die Kollektorplatte nicht vollständig, sondern lässt einen beschichtungsfreien Rand überstehen. Eine dünne, rahmenförmige Metallplatte, vorzugsweise aus Silber, wird so auf die Gasdiffusionselektrode aufgebracht, dass der metallische Rahmen eine möglichst geringe Fläche der elektrochemisch aktiven Beschichtung bedeckt und hierüber eine Dichtwirkung erzielt wird. Der über die SVE überstehende Rahmen dient dazu, die SVE mit dem Elektrolysevorrichtung beispielsweise mittels Schweißen zu verbinden. Diese Kontaktierung ist kompliziert und deckt einen Teil der SVE-Fläche ab, wodurch die lokale Stromdichte der freien SVE-Fläche steigt und die Performance des Elektrolyseurs aufgrund höherer Elektroysespannung sinkt. Außerdem bedeutet der komplizierte Einbau hohe Fertigungskosten des Elektrolyseurs bzw. hohe Kosten für den Wechsel der SVE.

Die DE 10330232 A1 beschreibt den Einbau einer SVE bei der in einem Arbeitsgang die Herstellung eines elektrischen Kontaktes zwischen SVE und Elektrolysevorrichtung sowie eine Abdichtung zwischen Gas- und Elektrolytraum erfolgt. Hierbei wird ein metallischer Streifen sowohl auf den beschichtungsfreien Rand der SVE als auch auf den mit katalysatorhaltigen Bereich der SVE aufgelegt und mittels Laserschweißtechnik mit der Haltestruktur der Elektrolysevorrichtung verbunden. Dieses Verfahren hat den Nachteil, dass die Bereiche des metallischen Streifens als auch der Schweißverbindung elektrochemisch inaktiv sind und dass das gewählte Verfahren sehr aufwändig ist.

Da SVEs nicht in Abmessungen zur Verfügung stehen, bei der nur eine SVE je Elektrolyseurvorrichtung eingebaut werden muss, müssen mehrere SVE je Elektrolysevorrichtung eingebaut werden. Der Einbau kann dabei durch geringe Überlappung der SVEs oder durch Einbau auf Stoß erfolgen. Selbst im Falle, dass eine große SVE zur Verfügung stehen würde, so dass eine SVE je Elektrolysevorrichtung eingebaut werden könnte, entstehen einbaubedingt Bereiche, an denen die SVE geknickt würde oder wo Fehlstellen der katalytische aktiven Komponente vorhanden wären, die abgedichtet werden müssen. Ebenso könne beschädigte Stelle der katalytisch aktiven Schicht durch unsachgemäße Behandlung vorhanden sein. An den beschädigten Stellen wäre die Trennung zwischen Gas- und Elektrolytraum und damit ein störungsfreier Betrieb nicht mehr gewährleistet.

Besondere Methoden zum Abdichten eventueller herstellungs- oder gebrauchsbedingter Risse oder Durchbrüche in SVEs sind aus dem Stand der Technik nicht weiter bekannt.

Aufgabe der Erfindung ist es daher, eine neue Methode zur Abdichtung der Überlappungsbereiche oder der einbaubedingten Knick-Bereiche oder Beschädigungen der SVE sowie Verfahren zum Abdichten eventueller herstellungs- oder gebrauchsbedingter Risse oder Durchbrüche in SVEs zur Verfügung zu stellen. Je nach dem konstruktiven Aufbau einer Elektrolysevorrichtung muss die SVE teilweise um Ecken geführt werden, wodurch eine starke mechanische Beanspruchung auf die SVE wirkt und hierdurch Undichtigkeiten auftreten können. Undichtigkeiten führen wie oben beschrieben dazu, dass Elektrolyt aus dem Elektrolytraum in den Gasraum oder Gas aus dem Gasraum in den Elektrolyten eindringen kann.

Weiterhin sollte der Einbau der SVEs in Elektrolysevorrichtungen, bei denen ein Gas- von einem Elektrolytraum getrennt wird, so gestaltet sein, dass weder Gas aus dem Gasraum in den Elektrolytraum noch Elektrolyt aus dem Elektrolytraum in den Gasraum eintreten kann. Die SVE sollte bei einer Druckdifferenz zwischen dem Gas- und dem Flüssigkeitsraum von 1 - 170 mbar (hPa) dicht sein. Hierbei ist mit dicht gemeint, dass kein sichtbares Austreten von Gasblasen in den Elektrolytraum beobachtbar ist. Mit flüssigkeitsdicht ist gemeint, dass eine Flüssigkeitsmenge von nicht mehr als 10 g /(h*cm²) durch die SVE tritt (wobei g für die Masse an Flüssigkeit, h für eine Stunde und cm² für die geometrische Elektrodenoberfläche steht). Tritt jedoch zuviel Flüssigkeit durch die SVE so kann diese nur an der der Gasseite zugewandten Seite nach unten abfließen. Dabei kann sich ein Flüssigkeitsfilm ausbilden, der den Gaszutritt zur SVE behindert und dadurch die Leistungsfähigkeit der SVE extrem negativ beeinflusst (Sauerstoff-Unterversorgung). Tritt zuviel Gas in den Elektrolytraum ein, so müssen die Gasblasen aus dem Elektrolytraum herausgeführt werden können. In jedem Fall blenden die Gasblasen Elektroden und Membranfläche ab, was zu einer Stromdichteverschiebung und damit im galvanostatischen Betrieb der Zelle zu einer lokalen Stromdichteerhöhung und über die Zelle zu einer unerwünschten Zellspannungserhöhung führt.

Weiterhin soll durch den Einbau nur eine möglichst geringe elektrochemisch aktive Fläche der Gasdiffusionselektrode verloren gehen und der Einbau technisch einfach durchführbar sein.

Die Aufgabenstellung konnte beispielsweise dadurch gelöst werden, dass die Überlappungsbereiche oder die beschädigten Bereiche einer SVE mit einer Paste abgedichtet werden, die aus Silberoxid und einer hydrophoben Polymerkomponente und einem perfluorierten oder teilfluorierten Lösungsmittel besteht.

Gegenstand der Erfindung ist ein Verfahren zum gasdichten Einbau von einer oder von mehreren angrenzenden Sauerstoffverzehrelektroden in eine elektrochemische Halbzelle, dadurch gekennzeichnet, dass beim Anbringen der Sauerstoffverzehrelektroden am Rahmen des Gaskompartiments der Halbzelle auftretende Knickbereiche, und/oder Rissbereiche der Sauerstoffverzehrelektroden, und/oder Überlappungsbereiche benachbarter Sauerstoffverzehrelektroden mit einer Paste - nachstehend auch Dichtpaste genannt - abgedichtet werden, die auf Silberoxid und einer hydrophoben Polymerkomponente und einem teil- oder perfluorierten Lösungsmittel basiert.

Das neue Verfahren kann insbesondere angewandt werden auf Gasdiffusionselektroden die als katalytisch aktive Komponente Silber und/oder Silberoxid enthalten. Die Erfindung bezieht sich bevorzugt auf den Einbau von Gasdiffusionselektroden in eine Elektrolysevorrichtung, bei der ein Gasraum von einem Elektrolytraum abgetrennt wird. Insbesondere werden dabei SVE auf Silberbasis eingesetzt, deren Herstellung beispielsweise in den Schriften DE 3710168 A1 oder EP 115 845 A1 beschrieben sind und bei der die katalytisch aktive Spezies in Form von Silber vorliegt. Ebenfalls könnten SVE basierend auf Katalysatoren, bei denen Silber auf Kohlenstoff geträgert ist, eingesetzt werden.

Die Dichtpaste und/oder die Sauerstoffverzehrelektroden basieren bevorzugt unabhängig voneinander auf einem fluorierten Polymeren, insbesondere auf Polytetrafluorethylen (PTFE), und einem Silber enthaltenden katalytisch aktiven Material.

In einer weiteren bevorzugten Ausführung des neuen Verfahrens umfasst die katalytisch aktive Komponente in der Dichtpaste und/oder in den Sauerstoffverzehrelektroden unabhängig voneinander: Silber, Silber-I-Oxid oder Silber-II-Oxid, oder Gemische von Silber- und Silberoxid.

Besonders bevorzugt für die Ausführung des neuen Verfahren ist, wenn die Überlappungs- und/oder Knickbereiche und/oder beschädigten Bereiche sich an Stellen in der Elektrolysevorrichtung befinden, an denen die Elektrolysevorrichtung nach dem Zusammenbau eine mechanische Kraft auf die mit der Paste behandelten Bereiche ausübt.

Beschreibung bevorzugter Formen der für das neue Verfahren geeigneten Dichtpaste:
Zur Herstellung der Dichtpaste wird bevorzugt Silberoxid mit folgendem mittleren Durchmesser eingesetzt: D50-Wert: 0,5 - 50 µm, bevorzugt 1 - 30 µm, wobei sich grundsätzlich auch gröbere oder feinere Pulver einsetzen lassen. Das eingesetzte hydrophobe Polymer sollte unter den Einsatzbedingungen der SVE chemisch beständig sein. Beispielsweise sollte bei der Chlor-Alkali-Elektrolyse das Polymer gegen 32 Gew.-%ige NaOH bei 90°C und reinem Sauerstoff beständig sein. Eingesetzt werden können z.B. fluorierte oder teilfluorierte Polymere wie z.B. Polytetrafluorethlyen (PTFE), Perfluoralkoxy (PFA), Perfluorethylen-propylen (FEP), Ethylentetrafluorethlyen (ETFE) oder Polyvinylidenfluorid (PVDF). Weiterhin sollte dass Polymer ebenso gegen die oxidierende Wirkung des Silberoxids weitgehend stabil sein, insbesondere bei den Bedingungen der Herstellung der Dichtpaste.

Die polymere Komponente der Dichtpaste besteht dabei vorzugsweise aus PTFE. Die Dichtpaste kann aus Silberoxid-Pulver, PTFE-Pulver, bevorzugt PTFE und einem fluorierten Lösungsmittel aus der Reihe der perfluorierten Kohlenstoffverbindungen, dies sind z.B. perfluorierte Alkane oder Amine wie z.B. Perfluoroktan oder Perfluortriethylamin, oder aus teilfluorierten Lösungsmitteln wie Perfluorpolyethern bestehen.

Die Mischung von Silberoxid, PTFE und fluoriertem / teilfluoriertem Lösungsmittel kann bevorzugt von Hand, in Knetern oder Mischern erfolgen.

Ebenfalls kann das PTFE mit dem fluorierten / teilfluorierten Lösungsmittel zuerst erfolgen, wobei dann zu der entstandenen Mischung das Silberoxid hinzugegeben wird.

Ebenfalls kann die Mischung von Silberoxid zuerst mit PTFE erfolgen und nach dem Mischprozess wird das fluorierte/teilfluorierte Lösungsmittel zugegeben

Der Anteil der polymeren Komponente bei der Paste in der Mischung mit Silberoxid ist bevorzugt so zu wählen, dass ein elektrochemische Reduktion des Silberoxids in der Dichtpaste unter den Bedingungen des Betriebes der SVE in der Elektrolysevorrichtung erfolgen kann.

Gemäß dem bevorzugten Verfahren beträgt der Silberoxid-Anteil in der Dichtpaste mindestens 10 Gew.-%, besonders bevorzugt mindestens 20 Gew.-% bezogen auf das Gesamtgewicht der Paste. Als Polymer wird besonders bevorzugt Polytetrafluorethylen (PTFE) eingesetzt. Besonders bevorzugt beträgt der Anteil der hydrophoben Polymerkomponente von höchstens 60 Gew.-%, besonders bevorzugt höchstens 40 Gew.-%, bezogen auf das Gesamtgewicht der Paste.

Zu dieser Mischung wird das fluorierten / teilfluorierten Lösungsmittel aus der Reihe der Perfluorinerten, Perfluorpolyether oder Mischungen dieser Lösungsmittel zugegeben.

Das fluorierte / teilfluorierte Lösungsmittel sollte bevorzugt einen Siedepunkt von weniger als 200°C aufweisen.

Der Anteil an fluorierten / teilfluorierten Lösungsmittel beträgt bevorzugt höchstens 80 Gew.-%, besonders bevorzugt weniger als 60 Gew.-%.

Die Menge an fluoriertem / teilfluorierten Lösungsmittel ist so zu bemessen, dass eine ausreichende streichfähige Masse entsteht. Ausreichend streichfähig heißt dabei, dass die Dichtpaste auf der Oberfläche der SVE, d.h die zur Elektrolytseite gewandten Seite der SVE bzw. der zur Gasseite gewandten Seite aufgetragen werden kann. Ist der Lösungsmittelanteil zu gering, kann die Dichtpaste nicht flächig aufgebracht werden, ist der Lösungsmittelanteil zu hoch, erfolgt eine Trennung von Lösungsmittel und Feststoff, was die Aufbringung erschwert. Wurde der PTFE-Anteil zu gering gewählt, wird die Dichtpaste unter Umständen zu hydrophil und haftet dadurch nicht hinreichend auf der SVE-Oberfläche bzw. auf deren Rückseite.

Ebenfalls kann das Silberoxid wie ein Füllstoff in die polymere Komponente, im Falle von PTFE, gemäß der EP 951500 durch Pastenextrusion eingearbeitet werden und somit eine poröse Folie erzeugt werden, die anschließend wieder zu einem Pulver zerkleinert werden kann, beispielsweise durch Behandlung in einem Mischer mit schnell laufenden Schlagwerkzeugen. Das erhaltene Pulver kann dann zur Herstellung der erfindungsgemäßen Paste mit dem fluorierten / teilfluorieten Lösungsmittel versetzt werden.

Weiterhin kann das Polymer mit Silberoxid analog dem Mischprozess der DE 2941774 verarbeitet und das erhaltene Pulver anschließend mit der fluorierten Lösungsmittel versetzt werden. Die Einarbeitung des fluorierten / teilfluorierten Lösungsmittels kann durch Weiterführung des Mischprozesses erfolgen.

### Anwendung der Dichtpaste:

Die Dichtpaste kann bevorzugt zur Abdichtung von Überlappungsbereichen von SVE eingesetzt werden, insbesondere in dem diese in einer Dicke im Bereich von 0,1 bis 1000µm auf eine, oder beide Seiten der abzudichtenden Bereiche der SVE aufgebracht wird. Anschließend werden die so mit Dichtpaste bestrichenen Bereiche übereinander gelegt. Die Reduktion des Silberoxid kann dann beispielsweise unter den Betriebsbedingungen in der Elektrolysevorrichtung erfolgen. Darüber erfolgt eine weitere Dichtwirkung im Überlappungsbereich.

In ähnlicher Weise können auch schadhafte Stelle in einer silber- bzw. silberoxidhalten katalytisch aktiven Schicht repariert und abgedichtet werden. Vorteil der so reparierten Bereiche ist, dass diese weiterhin auch für die elektrochemische Sauerstoffreduktion teilweise aktiv bleiben und somit die SVE-Fläche nicht wesentlich vermindert wird.

Die Schichtdicke der Sauerstoffverzehrelektrode beträgt ohne Dichtpaste typischerweise von 0,1 bis 0,8 mm, bevorzugt von 0,2 bis 0,7 mm

Weiterer Gegenstand der Erfindung ist eine elektrochemische Halbzelle mit einer oder mit mehreren, zueinander angrenzenden Sauerstoffverzehrelektroden, dadurch gekennzeichnet, dass die Sauerstoffverzehrelektroden beim Einbau am Rahmen des Gaskompartiments der Halbzelle auftretende Knickbereiche, und/oder Rissbereiche der Sauerstoffverzehrelektroden und/oder Überlappungsbereiche benachbarter Sauerstoffverzehrelektroden aufweisen, die mit einer Dichtpaste abgedichtet sind, die wenigstens auf Silberoxid und einer hydrophoben Polymerkomponente und einem fluorierten Lösungsmittel basiert.

Eine bevorzugte elektrochemische Halbzelle ist dadurch gekennzeichnet, dass sie in der Gasdiffusionsschicht der Sauerstoffverzehrelektroden fluorierte Polymere, insbesondere Polytetrafluorethylen (PTFE), enthält.

Weiter bevorzugt sind Varianten der elektrochemischen Halbzelle mit einem Einbau von Sauerstoffverzehrelektroden gemäß einem der oben beschriebenen neuen Verfahren erhalten sind.

Gegenstand der Erfindung ist auch noch die Verwendung der neuen elektrochemischen Zelle in der Chloralkalielektrolyse, insbesondere in der NaCl-Elektrolyse.

Die Erfindung wird nachfolgend anhand der Figuren durch die Beispiele, welche jedoch keine Beschränkung der Erfindung darstellen, näher erläutert.

Es zeigen:
- Fig. 1: einen schematischen Querschnitt durch eine elektrochemische Zelle 2, 10 im halb geöffneten Zustand - Darstellung des Überlappungsbereichs 8
- Fig. 2a: eine schematische Darstellung der Abdeckung von zwei Sauerstoffverzehrelektroden 1 und 1a mit einer Dichtpaste 9 im Bereich 8, an dem sich die Sauerstoffverzehrelektroden 1 und la überlappen, sowie die Abdeckung eines Risses 6 in der Sauerstoffverzehrelektrode la mit einer Dichtpaste 9

In den Figuren haben die Bezugszeichen die jeweils rechts stehende Bedeutung:
- 1, 1a: Sauerstoffverzehrelektroden
- 2: Elektrochemische Halbzelle
- 3: Rahmen
- 4: Gaskompartiment
- 5: Knickbereich 6 Rissbereich
- 7: Anode
- 8: Überlappungsbereich
- 9: Dichtpaste
- 10: Anodenhalbschale mit Anode 7
- 11: Ionenaustauschermembran
- 12: Spacer
- 13: Stützstruktur
- 14: Dichtprofil

### Beispiel

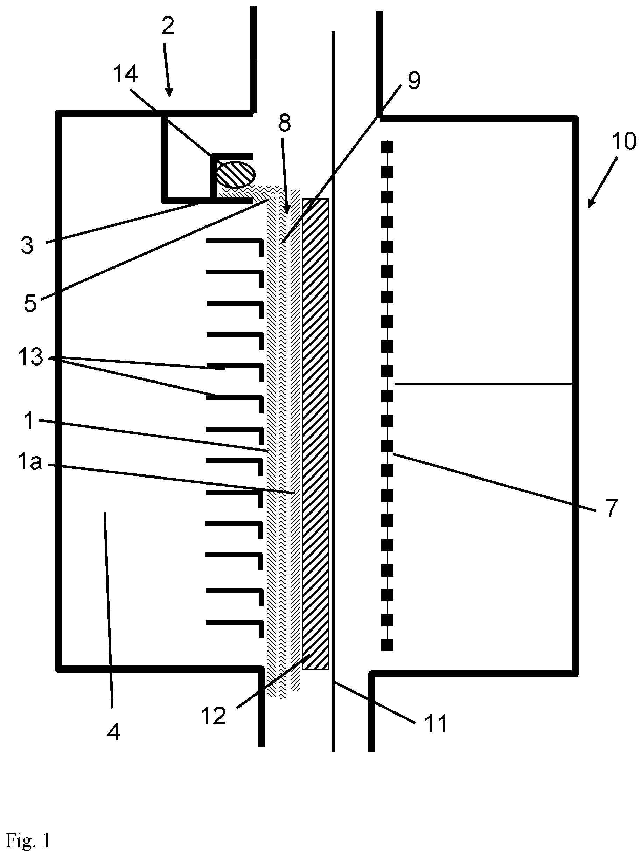

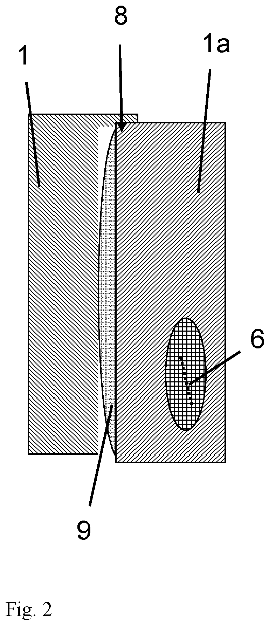

20g PTFE (Typ TF2053 der Fa. Dyneon) und 40g Perfluoropolyether (Typ Galden SV90; Hersteller: Solvay Solexis) und 20g Silberoxid (mittlerer Teilchendurchmesser D ₅₀ : 8µm) wurden mit einem Glasstab solange vermischt, bis eine homogene Dichtpaste entstand. Die Dichtpaste wurde auf die Sauerstoffverzehrelektroden (SVE)-Oberfläche und SVE-Rückseite im Überlappungsbereich 8 zweier Sauerstoffverzehrelektroden 1 und la aufgebracht. Die Sauerstoffverzehrelektroden 1 und 1a waren silberbasierte SVE die gemäß der EP 115 845 A1 hergestellt sind. Ebenfalls könnten alternativ SVE basierend auf Katalysatoren, bei denen Silber auf Kohlenstoff geträgert ist, eingesetzt werden. Der Überlappungsbereich 8 der Sauerstoffverzehrelektroden (1) und (1a) betrug 8mm. Weiterhin wurde die Dichtpaste auch im Überlappungsbereich 8 aufgebracht, die Dicke der Dichtpaste 9 betrug ca. 1mm. Die Dichtwirkung wurde in einer elektrochemischen Zelle untersucht. In der Kathodenhalbzelle 2 erfolgt die Stromzuführung zur Kathode 1, 1a über eine Stützstruktur 13 (siehe Fig. 1). Hierzu wurden zwei Silberoxid-basierte Sauerstoffverzehrkathoden 1 und 1a (SVE) überlappend zusammengeführt und mit einem Dichtprofil 14 in einer Profilkante des Rahmens 3 fixiert (siehe Fig. 1). Über dem Überlappungsbereich 8 wurde die oben beschriebene silberoxidbasierte Paste 9 so verteilt, dass die Paste 9 den Überlappungsbereich 8 vollständig abdeckte. Figur 2 verdeutlicht in einer schematischen Seitenansicht zu Fig. 1 die Lage der Paste 9 und der SVEs 1 und 1a im Überlappungsbereich 8. Die Anodenhalbzelle 10 wies eine Anode 7 aus Titan-Streckmetall mit einem edelmetalloxidhaltigem DSA®-Coating der Fa. Denora auf. Zu- und Ablauf der Elektrolyten sowie der Gase sind in den Figuren nicht gezeichnet, da sie außerhalb der Schnittebene liegen. Da die Elektrolysezelle als Fallfilmzelle betrieben wurde, ist der Katholytzulauf im oberen Teil der Halbzelle angebracht und der Ablauf befindet sich am unteren Ende des Distanzstücks 12. Die elektrochemische Zelle wurde anschließend zusammengebaut und in Betrieb genommen.Der Laugedruck an der Unterkante der Zelle betrug 20mbar. Der Gasdruck (Sauerstoff) im Gasraum 4 betrug 60mbar. Als Anolyt diente eine Natriumchloridhaltige Lösung mit einem Natriumchlorid-Gehalt von 210g/l und als Katholyt wurde eine 30Gew.%ige Natronlauge eingesetzt. Die Temperatur der Elektrolyte betrug ca. 85°C, die Stromdichte betrug 4kA/m².

Auf dem Überlappungsbereich 8 verlief ein Distanzstück 12, das den Abstand zwischen Ionenaustauschermembran (Typ: Nafion N982WX, Hersteller DuPont) 11 und silberbasierter Sauerstoffverzehrelektroden 1 und 1a konstant auf 3mm hielt. Nach Inbetriebnahme konnte kein erhöhter Gas- oder Flüssigkeitsdurchbruch festgestellt werden. Die Zellspannung der Zelle lag im erwarteten Bereich und war nicht erhöht im Verhältnis zu einer Zelle mit nur einer durchgehenden Sauerstoffverzehrkathode ohne Überlappungsbereich 8.

Mit Hilfe der Paste 9 ist es auch möglich ähnlich der zuvor beschriebenen Weise am Rahmen 3 des Gaskompartiments 4 der Zelle 2 auftretende Knickbereiche 5, oder Rissbereiche 6 der Sauerstoffverzehrelektroden 1, 1a abzudichten wie dies in Fig. 2 angedeutet wird.

## Patentansprüche

1. Verfahren zum gasdichten Einbau von einer oder von mehreren angrenzenden Sauerstoffverzehrelektroden (1, 1a) in eine elektrochemische Halbzelle (2), **dadurch gekennzeichnet, dass** beim Anbringen der Sauerstoffverzehrelektroden (1, 1a) am Rahmen (3) des Gaskompartiments (4) der Zelle (2) auftretende Knickbereiche (5), und/oder Rissbereiche (6) der Sauerstoffverzehrelektroden (1, 1a), und/oder Überlappungsbereiche (8) benachbarter Sauerstoffverzehrelektroden (1) und (1a) mit einer Paste (9) abgedichtet werden, die wenigstens auf Silberoxid und einer hydrophoben Polymerkomponente und einem perfluorierten oder teilfluorierten Lösungsmittel basiert.

2. Verfahren nach Anspruch 1, **dadurch gekennzeichnet, dass** die Paste (9) Silberoxid mit einem mittleren Durchmesser D50 von 0,5 bis 50µm, bevorzugt von 1 bis 30µm aufweist

3. Verfahren nach Anspruch 1 oder 2, **dadurch gekennzeichnet, dass** die Paste (9) und/oder die Sauerstoffverzehrelektroden (1, 1a) unabhängig voneinander auf einem fluorierten oder teilfluorierten Polymeren, insbesondere Polytetrafluorethylen (PTFE), und einem Silber enthaltenden katalytisch aktiven Material basieren.

4. Verfahren gemäß einem der Ansprüche 1 bis 3, **dadurch gekennzeichnet, dass** die katalytisch aktive Komponente in der Paste (9) und/oder in den Sauerstoffverzehrelektroden (1, 1a) unabhängig voneinander: Silber, Silber-I-Oxid oder Silber-II-Oxid, oder Gemische von Silber- und Silberoxid umfasst.

5. Verfahren gemäß einem der Ansprüche 1 bis 4, **dadurch gekennzeichnet, dass** der Gehalt der katalytisch aktiven Komponente in der Paste (9) mindestens 10 Gew.-% Silberoxid, besonders bevorzugt mindestens 20 Gew.-% Silberoxid, bezogen auf das Gesamtgewicht der Paste umfasst.

6. Verfahren nach einem der Ansprüche 1 bis 5, **dadurch gekennzeichnet, dass** die Dichtpaste (9) und/oder die Sauerstoffverzehrelektroden (1, 1a) Mischungen aufweist, die unabhängig voneinander als katalytisch aktive Komponente 70 bis 95 Gew.-% Silberoxid, 0 - 15 Gew.-% Silber-Metall-Pulver und 3 - 15 Gew.-% eines fluorierten Polymeren, insbesondere PTFE, enthalten.

7. Verfahren nach einem der Ansprüche 1 bis 6, **dadurch gekennzeichnet, dass** die Paste (9) und die Sauerstoffverzehrelektroden (1, 1a) nach dem Aufbringen der Paste (9) miteinander verpresst werden.

8. Verfahren nach einem der Ansprüche 1 bis 7, **dadurch gekennzeichnet, dass** die Paste (9) als fluoriertes Lösungsmittel eines aus der Reihe der perfluorierten Kohlenwasserstoffe, bevorzugt Perfluoroktan oder Perfluortriethylamin oder Perfluorpolyether oder Mischungen dieser Lösungsmittel aufweist.

9. Verfahren nach einem der Ansprüche 1 bis 8, **dadurch gekennzeichnet, dass** die Paste (9) einen Anteil der hydrophoben Polymerkomponente von höchstens 60 Gew.-%, besonders bevorzugt höchstens 40 Gew.-%, bezogen auf das Gesamtgewicht der Paste hat.

10. Verfahren nach einem der Ansprüche 1 bis 9, **dadurch gekennzeichnet, dass** die Paste (9) einen Anteil der teil- oder perfluorierten Lösungsmittel von höchstens 80 Gew.-%, besonders bevorzugt höchstens 60 Gew.-%, bezogen auf das Gesamtgewicht der Paste aufweist.

11. Verfahren nach einem der Ansprüche 1 bis 9, **dadurch gekennzeichnet, dass** die Paste (9) in einer Dicke von 0,1 bis 1000µm auf eine, oder beide Seiten der abzudichtenden Bereiche der SVE aufgebracht wird.

12. Elektrochemische Halbzelle (2), mit einer oder mit mehreren, zueinander angrenzenden Sauerstoffverzehrelektroden (1, 1a), **dadurch gekennzeichnet, dass** die Sauerstoffverzehrelektroden (1, 1a) beim Einbau am Rahmen (3) des Gaskompartiments (4) der Zelle (2) auftretende Knickbereiche (5), und/oder Rissbereiche (6) der Sauerstoffverzehrelektroden (1, 1a) und/oder Überlappungsbereiche (8) benachbarter Sauerstoffverzehrelektroden (1) und (1a) aufweisen, die mit einer Dichtpaste (9) abgedichtet sind, die wenigstens auf Silberoxid und einer hydrophoben Polymerkomponente und einem fluorierten Lösungsmittel basiert.

13. Elektrochemische Halbzelle (2) nach Anspruch 12, mit einem Einbau von Sauerstoffverzehrelektroden (1, 1a) gemäß einem Verfahren nach einem der Ansprüche 2 bis 11.

14. Verwendung der Elektrochemische Halbzelle (2) nach einem der Ansprüche 12 bis 13 in der Chloralkalielektrolyse, insbesondere der NaCl-Elektrolyse.

## Claims

1. Method for the gastight installation of one or more joining oxygen-consuming electrodes (1, 1a) in an electrochemical half cell (2), **characterized in that** creased regions (5) and/or cracked regions (6) of the oxygen-consuming electrodes (1, 1a) and/or overlap regions (8) of adjacent oxygen-consuming electrodes (1) and (1a) occurring when the oxygen-consuming electrodes (1, 1a) are brought into juxtaposition with the frame (3) of the gas compartment (4) of the cell (2) are sealed with a paste (9) which is based at least on silver oxide and a hydrophobic polymer component and a perfluorinated or partially fluorinated solvent.

2. Method according to Claim 1, **characterized in that** the paste (9) has silver oxide having an average diameter D50 of from 0.5 to 50 µm, preferably from 1 to 30 µm.

3. Method according to Claim 1 or 2, **characterized in that** the paste (9) and/or the oxygen-consuming electrodes (1, 1a) are, independently of one another, based on a fluorinated or partially fluorinated polymer, in particular polytetrafluoroethylene (PTFE) and a silver-containing catalytically active material.

4. Method according to any of Claims 1 to 3, **characterized in that** the catalytically active component in the paste (9) and/or in the oxygen-consuming electrodes (1, 1a) comprises independently of one another silver, silver(I) oxide or silver(II) oxide or mixtures of silver and silver oxide.

5. Method according to any of Claims 1 to 4, **characterized in that** the content of the catalytically active component in the paste (9) comprises at least 10% by weight of silver oxide, particularly preferably at least 20% by weight of silver oxide, based on the total weight of the paste.

6. Method according to any of Claims 1 to 5, **characterized in that** the sealing paste (9) and/or the oxygen-consuming electrodes (1, 1a) comprises mixtures which, independently of one another, contain, as catalytically active component, from 70 to 95% by weight of silver oxide, 0-15% by weight of silver metal powder and 3-15% by weight of a fluorinated polymer, in particular PTFE.

7. Method according to any of Claims 1 to 6, **characterized in that** the paste (9) and the oxygen-consuming electrodes (1, 1a) are pressed together after application of the paste (9).

8. Method according to any of Claims 1 to 7, **characterized in that** the paste (9) comprises a solvent selected from the group consisting of perfluorinated hydrocarbons, preferably perfluorooctane or perfluorotriethylamine or perfluoropolyether or mixtures of these solvents, as fluorinated solvent.

9. Method according to any of Claims 1 to 8, **characterized in that** the paste (9) has a proportion of the hydrophobic polymer component of not more than 60% by weight, particularly preferably not more than 40% by weight, based on the total weight of the paste.

10. Method according to any of Claims 1 to 9, **characterized in that** the paste (9) has a proportion of the partially fluorinated or perfluorinated solvent of not more than 80% by weight, particularly preferably not more than 60% by weight, based on the total weight of the paste.

11. Method according to any of Claims 1 to 9, **characterized in that** the paste (9) is applied in a thickness of from 0.1 to 1000 µm to one or both sides of the regions to be sealed of the OCE.

12. Electrochemical half cell (2), having one or more adjoining oxygen-consuming electrodes (1, 1a), **characterized in that** the oxygen-consuming electrodes (1, 1a) have creased regions (5), and/or cracked regions (6) of the oxygen-consuming electrodes (1, 1a) and/or overlap regions (8) of adjacent oxygen-consuming electrodes (1) and (1a) occurring on installation on the frame (3) of the gas compartment (4) of the cell (2) and these regions are sealed with a sealing paste (9) which is based at least on silver oxide and a hydrophobic polymer component and a fluorinated solvent.

13. Electrochemical half cell (2) according to Claim 12, with installation of oxygen-consuming electrodes (1, 1a) according to a method according to any of Claims 2 to 11.

14. Use of the electrochemical half cell (2) according to either of Claims 12 and 13 in chloralkali electrolysis, in particular the electrolysis of NaCl.

## Revendications

1. Procédé d'intégration étanche aux gaz d'une ou de plusieurs électrodes d'alimentation en oxygène adjacentes (1, 1a) dans une demi-cellule électrochimique (2), **caractérisé en ce que** les zones de coude (5) qui se forment lors de la disposition des électrodes d'alimentation en oxygène (1, 1a) sur le châssis (3) du compartiment de gaz (4) de la cellule, et/ou les zones de fissure (6) des électrodes d'alimentation en oxygène (1, 1a), et/ou les zones de chevauchement (8) d'électrodes d'alimentation en oxygène voisines (1) et (1a) sont étanchéifiées avec une pâte (9), qui est à base d'au moins un oxyde d'argent et d'un composant polymère hydrophobe et d'un solvant perfluoré ou partiellement fluoré.

2. Procédé selon la revendication 1, **caractérisé en ce que** la pâte (9) comprend de l'oxyde d'argent ayant un diamètre moyen D50 de 0,5 à 50 µm, de préférence de 1 à 30 µm.

3. Procédé selon la revendication 1 ou 2, **caractérisé en ce que** la pâte (9) et/ou les électrodes d'alimentation en oxygène (1, 1a) sont indépendamment les uns des autres à base d'un polymère fluoré ou partiellement fluoré, notamment de polytétrafluoroéthylène (PTFE), et d'un matériau catalytiquement actif contenant de l'argent.

4. Procédé selon l'une quelconque des revendications 1 à 3, **caractérisé en ce que** le composant catalytiquement actif dans la pâte (9) et/ou dans les électrodes d'alimentation en oxygène (1, 1a) comprend indépendamment les uns des autres : de l'argent, de l'oxyde d'argent I ou de l'oxyde d'argent II, ou des mélanges d'argent et d'oxyde d'argent.

5. Procédé selon l'une quelconque des revendications 1 à 4, **caractérisé en ce que** la teneur du composant catalytiquement actif dans la pâte (9) est d'au moins 10 % en poids d'oxyde d'argent, de manière particulièrement préférée d'au moins 20 % en poids d'oxyde d'argent, par rapport au poids total de la pâte.

6. Procédé selon l'une quelconque des revendications 1 à 5, **caractérisé en ce que** la pâte d'étanchéité (9) et/ou les électrodes d'alimentation en oxygène (1, 1a) comprennent des mélanges qui contiennent indépendamment les uns des autres en tant que composant catalytiquement actif 70 à 95 % en poids d'oxyde d'argent, 0 à 15 % en poids de poudre de métal argent et 3 à 15 % en poids d'un polymère fluoré, notamment de PTFE.

7. Procédé selon l'une quelconque des revendications 1 à 6, **caractérisé en ce que** la pâte (9) et les électrodes d'alimentation en oxygène (1, 1a) sont comprimées les unes avec les autres après l'application de la pâte (9).

8. Procédé selon l'une quelconque des revendications 1 à 7, **caractérisé en ce que** la pâte (9) comprend en tant que solvant fluoré un de la série constituée par les hydrocarbures perfluorés, de préférence le perfluorooctane ou la perfluorotriéthylamine ou le perfluoropolyéther ou des mélanges de ces solvants.

9. Procédé selon l'une quelconque des revendications 1 à 8, **caractérisé en ce que** la pâte (9) présente une proportion du composant polymère hydrophobe d'au plus 60 % en poids, de manière particulièrement préférée d' au plus 40 % en poids, par rapport au poids total de la pâte.

10. Procédé selon l'une quelconque des revendications 1 à 9, **caractérisé en ce que** la pâte (9) présente une proportion du solvant partiellement ou perfluoré d'au plus 80 % en poids, de manière particulièrement préférée d'au plus 60 % en poids, par rapport au poids total de la pâte.

11. Procédé selon l'une quelconque des revendications 1 à 9, **caractérisé en ce que** la pâte (9) est appliquée en une épaisseur de 0,1 à 1 000 µm sur un côté ou les deux côtés des zones à étanchéifier des électrodes d'alimentation en oxygène.

12. Demi-cellule électrochimique (2), comprenant une ou plusieurs électrodes d'alimentation en oxygène adjacentes (1, 1a), **caractérisée en ce que** les électrodes d'alimentation en oxygène (1, 1a) présentent des zones de coude (5) qui se forment lors de la disposition sur le châssis (3) du compartiment de gaz (4) de la cellule, et/ou les zones de fissure (6) des électrodes d'alimentation en oxygène (1, 1a), et/ou les zones de chevauchement (8) d'électrodes d'alimentation en oxygène voisines (1) et (1a), qui sont étanchéifiées avec une pâte d'étanchéité (9), qui est à base d'au moins un oxyde d'argent et d'un composant polymère hydrophobe et d'un solvant fluoré.

13. Demi-cellule électrochimique (2) selon la revendication 12, avec une intégration des électrodes d'alimentation en oxygène (1, 1a) par un procédé selon l'une quelconque des revendications 2 à 11.

14. Utilisation de la demi-cellule électrochimique (2) selon l'une quelconque des revendications 12 à 13 dans l'électrolyse chlore-alcali, notamment l'électrolyse NaCl.
